# EUROPEAN PATENT APPLICATION

(11) **EP 4 216 116 A1**
(43) Date of publication of application: **26.07.2023**
(21) Application number: 20954065.7
(22) Date of filing: 16.09.2020
(51) Int. Cl.: G06Q 10/04

(54) **IN-BUILDING TRAFFIC FLOW SETTING DEVICE AND IN-BUILDING TRAFFIC FLOW SETTING METHOD**

(71) Applicant: Hitachi, Ltd., Tokyo 100-8280 (JP)
(72) Inventor: HATORI, Takahiro, Tokyo 101-8941 (JP); FUJIWARA, Masayasu, Tokyo 100-8280 (JP); TORIUMI, Wataru, Tokyo 100-8280 (JP); MAEHARA, Tomoaki, Tokyo 101-8941 (JP)
(74) Representative: MERH-IP Matias Erny Reichl Hoffmann Patentanwälte PartG mbB
(86) International application number: PCT/JP2020/035006
(87) International publication number: WO 2022/059079

(57) **Abstract**

An in-building traffic flow setting device includes a database unit that stores data of a BIM model of a building, a people flow simulator unit that simulates a traffic flow in the building indicated by the BIM model stored in the database unit, and an elevator simulator unit that simulates an operation of an elevator installed in the building based on the traffic flow simulated by the people flow simulator unit. Here, the people flow simulator unit includes a position attribute generation unit that generates an attribute of a position on each floor indicated by the BIM model, and a movement demand calculation unit that calculates a movement demand on each floor indicated by the BIM model in consideration of the attribute of each position generated by the position attribute generation unit.

## Description

### Technical Field

The present invention relates to an in-building traffic flow setting device and an in-building traffic flow setting method.

### Background Art

When a building in which an elevator is installed is designed or an elevator in a building is upgraded, it is important to predict a traffic flow that is a flow of people on each floor in the building. When the prediction of the traffic flow in the building is appropriate, it is possible to install the elevator on an appropriate scale and appropriately set the operation state of the elevator based on the prediction. For example, if the number of elevators installed in the building is appropriate based on the prediction of the traffic flow in the building, it makes it possible to keep the time in which a user of the building waits in an elevator hall, within a relatively short time.

When the traffic flow in the building is calculated, it is known that a building information modeling (BIM) model indicating the arrangement of an office, an elevator, and the like on each floor in the building is created by using a BIM method from a design drawing of the building or the like, and the traffic flow is calculated from the BIM model.

PTL 1 discloses a method of obtaining a traffic flow of an elevator in a building by using a BIM model.

### Citation List

### Patent Literature

PTL 1: JP 2014-9073 A

### Summary of Invention

### Technical Problem

As disclosed in PTL 1, the BIM model is created from a design drawing of the building or the like, and the number of occupants in an office or the like on each floor indicated by the BIM model is appropriately set, whereby it is possible to predict the traffic flow in the building. However, in an actual building, there is a case where, even when the number of occupants in each office can be accurately set, the traffic flow is not as predicted. For example, in a building where security measures are taken, there is a case where the building is divided into an area where all employees working in the building can pass and an area where only specific employees such as staffs can pass. In the case of such a building, in the area where only specific employees can pass, a traffic flow is generally smaller than that in other areas, and, unlike a result predicted by the BIM model simply created from a design drawing or the like, a trouble such as congestion of a specific elevator occurs more than the prediction.

An object of the present invention is to provide an in-building traffic flow setting device and an in-building traffic flow setting method capable of accurately predicting a traffic flow in accordance with an actual use state.

### Solution to Problem

In order to solve the above problems, for example, configurations described in the claims are adopted.

The present application includes a plurality of means for solving the above problems. As an example, an in-building traffic flow setting device includes a database unit that stores data of a BIM model of a building, a people flow simulator unit that simulates a traffic flow in the building, which is indicated by the BIM model stored in the database unit, and an elevator simulator unit that simulates an operation of an elevator installed in the building based on the traffic flow simulated by the people flow simulator unit. The people flow simulator unit includes a position attribute generation unit that generates an attribute of a position of each floor indicated by the BIM model, and a movement demand calculation unit that calculates a movement demand of each floor indicated by the BIM model in consideration of the attribute of each position generated by the position attribute generation unit.

According to the present invention, it is possible to calculate an accurate movement demand in accordance with an actual use situation such as setting of a passage-permitted area of presence personnel in a building.

Objects, configurations, and advantageous effects other than those described above will be clarified by the descriptions of the following embodiments.

### Brief Description of Drawings

[FIG. 1] FIG. 1 is a configuration diagram illustrating an example of an in-building traffic flow setting device according to an embodiment of the present invention.
[FIG. 2] FIG. 2 is a block diagram illustrating a hardware configuration example of the in-building traffic flow setting device according to the embodiment of the present invention.
[FIG. 3] FIG. 3 is a diagram illustrating an example (Example 1) of a BIM model according to the embodiment of the present invention.
[FIG. 4] FIG. 4 is a diagram illustrating an example of passage classification of a specific floor in the BIM model of FIG. 3.
[FIG. 5] FIG. 5 is a diagram illustrating an example of an attribute of a door in the BIM model of FIG. 3.
[FIG. 6] FIG. 6 is a diagram illustrating an example (Example 2) of the BIM model according to the embodiment of the present invention.
[FIG. 7] FIG. 7 is a diagram illustrating an example of passage classification of one floor in the BIM model of FIG. 6.
[FIG. 8] FIG. 8 is a diagram illustrating an example of passage classification of two floors in the BIM model of FIG. 6.
[FIG. 9] FIG. 9 is a diagram illustrating an example of attributes of a door and a gate in the BIM model of FIG. 6.
[FIG. 10] FIG. 10 is a diagram illustrating an example of a presence personnel database according to the embodiment of the present invention.
[FIG. 11] FIG. 11 is a diagram illustrating an example (Example 1) of a movement demand distribution database according to the embodiment of the present invention.
[FIG. 12] FIG. 12 is a diagram illustrating an example (Example 2) of the movement demand distribution database according to the embodiment of the present invention.
[FIG. 13] FIG. 13 is a diagram illustrating an example of movement demand data according to the embodiment of the present invention.
[FIG. 14] FIG. 14 is a diagram illustrating an example of presence personnel data according to the embodiment of the present invention.
[FIG. 15] FIG. 15 is a diagram illustrating a setting example of an elevator according to the embodiment of the present invention.
[FIG. 16] FIG. 16 is a diagram illustrating an example of a demand generation rate of a specific facility according to the embodiment of the present invention.
[FIG. 17] FIG. 17 is a diagram illustrating an example of stay time in the specific facility according to the embodiment of the present invention.
[FIG. 18] FIG. 18 is a diagram illustrating a setting example of transport capacity for each use of a building according to the embodiment of the present invention.
[FIG. 19] FIG. 19 is a flowchart illustrating a calculation example of a traffic flow according to the embodiment of the present invention.
[FIG. 20] FIG. 20 is a flowchart illustrating a processing example of a layout data conversion unit according to the embodiment of the present invention.
[FIG. 21] FIG. 21 is a flowchart illustrating a processing example of a position attribute generation unit according to the embodiment of the present invention.
[FIG. 22] FIG. 22 is a flowchart illustrating a processing example of a presence personnel calculation unit according to the embodiment of the present invention.
[FIG. 23] FIG. 23 is a flowchart illustrating a processing example of a presence personnel evaluation unit according to the embodiment of the present invention.
[FIG. 24] FIG. 24 is a flowchart illustrating a processing example of a presence personnel correction unit according to the embodiment of the present invention.
[FIG. 25] FIG. 25 is a flowchart illustrating a calculation example of the movement demand for each time section in a movement demand calculation unit according to the embodiment of the present invention.
[FIG. 26] FIG. 26 is a flowchart illustrating a calculation example of the traffic flow for each time section in the movement demand calculation unit according to the embodiment of the present invention.

### Description of Embodiments

Hereinafter, an embodiment of the present invention will be described in detail with reference to the accompanying drawings. In the following description, an embodiment of the present invention will be referred to as the present example.

### [Configuration of In-Building Traffic Flow Setting Device]

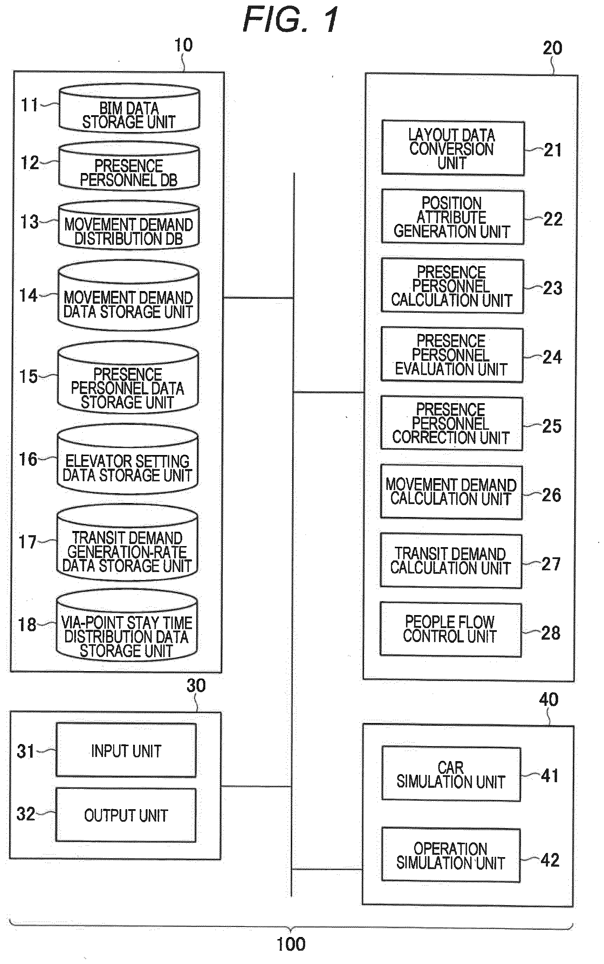

FIG. 1 illustrates a configuration of an in-building traffic flow setting device 100 in the present example.

The in-building traffic flow setting device 100 includes a database unit 10, a people flow simulator unit 20, an interface unit 30, and an elevator simulator unit 40.

The database unit 10 includes a BIM data storage unit 11, a presence personnel database 12, a movement demand distribution database 13, a transit demand generation-rate data storage unit 18, and a via-point stay time data storage unit 19.

The BIM data storage unit 11 is a processing unit that reads and stores a BIM model provided by the customer or a BIM model created by the company. The provider may access data stored in a certain server and copy the data to an area, or may read the data from the outside to the database area.

The presence personnel database 12 is a database of the number of people who can be present at each floor indicated by the BIM. model. Specifically, the presence personnel database 12 is a database that stores final operation data in the BIM model from a presence personnel data storage unit 15 that temporarily stores types of data calculated by a presence personnel calculation unit 23, a presence personnel evaluation unit 24, and a presence personnel correction unit 25 based on the BIM model.

The movement demand distribution database 13 is a database that stores a distribution of a movement demand in a building. Specifically, the movement demand distribution database 13 is a database that stores final operation data in the BIM model from a movement demand data storage unit 14 and a transit demand generation-rate data storage unit 17 that temporarily store types of data calculated by a movement demand calculation unit 26 and a transit demand calculation unit 27 based on the BIM model.

The movement demand data storage unit 14 stores data on the movement demand in the building. For example, the movement demand data storage unit 14 stores a usage status ratio value from each entrance of the building, which is input by a user and obtained from an input unit 51, with respect to the obtained presence personnel in the building, which is calculated by the presence personnel calculation unit 23 by the movement demand calculation unit 26. It is assumed that the usage status is set for each time section or each traffic demand, for example.

The presence personnel data storage unit 15 stores data of the presence personnel in the building. The presence personnel calculated by the presence personnel calculation unit 23 is stored.

An elevator setting data storage unit 16 stores data about an elevator installed in the building. Here, for example, the user may input, with the input unit 51, a parameter for driving a car simulation unit 41 and an operation simulation unit 42 and the parameter may be stored. The parameter is, for example, an elevator rated speed, a capacity, a door width, a stop floor, or the like. In addition to the input from the input unit 51, each parameter may be read from an elevator model included in the BIM model. However, there is a case where a necessary parameter is not input depending on the operation of the BIM model. In this case, the user may input the insufficient parameter with the input unit 51 and the parameter may be corrected.

The transit demand generation-rate data storage unit 17 stores transit demand generation-rate data that is data of an occurrence rate- of a transit demand for moving through a via-point, which is not a movement demand for directly moving between a building entrance and a room, among movement demands in the building. Here, the via-point includes a toilet, a store, and the like in a building. Here, the transit demand generation-rate data calculated by the transit demand calculation unit 27 is stored.

The via-point stay time distribution data storage unit 18 stores via-point stay time distribution data that is data of a distribution of time for staying at the via-point. The via-point stay time distribution data storage unit 18 stores the stay time at each via-point input by the input unit 51. As the via-point stay time distribution data stored by the via-point stay time distribution data storage unit 18, data of the stay time detected by a human sensor installed at a via-point of a building (toilets, stores, and the like) may be used.

The people flow simulator unit 20 includes a layout data conversion unit 21, a position attribute generation unit 22, the presence personnel calculation unit 23, the presence personnel evaluation unit 24, the presence personnel correction unit 25, the movement demand calculation unit 26, the transit demand calculation unit 27, a people flow control unit 28, a simulation evaluation unit 29, and an abnormality determination unit 30.

The layout data conversion unit 21 converts the input BIM model into a layout data format included in a simulator. Specifically, information of a floor, a wall, a door, and the like is analyzed and taken from a property of each part of the BIM model. Furthermore, depending on the resolution of the simulator, a case where the conversion is coarser than the BIM model or vice versa is assumed. In this case, data is converted from the BIM model in accordance with the resolution of the layout data format. At this time, it should be noted that data conversion is performed so that wall and door information is not lost.

The position attribute generation unit 22 performs position attribute generation processing of generating an attribute (position attribute) of each position indicated by the BIM model. Note that a specific example of the position attribute will be described later.

The presence personnel calculation unit 23 calculates the presence personnel in the building indicated by the BIM model. The presence personnel in the building is calculated by using the area of the room on each floor, a usage form, and the like. In the usage form, the number of people per unit area is converted depending on an office, a hospital, an apartment, or the like, whereby the presence personnel in the building can be calculated.

The presence personnel evaluation unit 24 evaluates whether or not the calculation result in the presence personnel calculation unit 23 is appropriate. The presence personnel evaluation unit 24 may perform the evaluation automatically by a set method, or may perform the evaluation by an operator performing a simulation work while viewing the calculation result. The set method is, for example, a method of comparing a scale of a case (data in which the entire stopping floor, the building planar area, and the number of elevators installed are stored) from a past case database with similar building information, and evaluating the case as NG when a ratio with the presence personnel at the scale exceeds or falls below +10%.

In addition, as a method of the operator performing the simulation work while viewing the calculation result, it is not possible to visually perform the evaluation unless the area in which a building user is present is clarified in order to calculate the presence personnel in addition to the calculated presence personnel. Thus, the area in which the building user is present on the plane of each floor is depicted so that the user can visually understand the area, and the user is asked to check the area. It should be noted that what can be visually understood may be a method of color-coding an area in which the building user is present. In addition, the ratio to the presence personnel used in the evaluation is obtained from the accuracy from past records, and is not limited to the numerical value.

The presence personnel correction unit 25 corrects the calculation result in the presence personnel calculation unit 23 based on the evaluation result in the presence personnel evaluation unit 24. When the presence personnel evaluation unit 24 performs evaluation as NG, an automatic method and a manual method are also assumed. In the case of the automatic method, the conversion from the BIM model to layout data is analyzed again, and whether or not there is excess or deficiency in the area where the user is present is analyzed. When the value of NG exceeds +10%, a larger number of people than before is calculated, which indicates that the area where the building user is present is set to be larger, and whether an excess area is set as the area where the building user is present is analyzed. When the value of NG is less than -10%, it indicates that the area where the building user is present is set to be small, and whether setting omission of the area where the building user is present occurs is analyzed. In the case of the manual method, similarly, the presence personnel evaluation unit 24 depicts the area in which the user is present so that the user can visually understand the area and cause the user to checks the area.

The movement demand calculation unit 26 creates movement demand distribution data for each floor in the building indicated by the BIM model. In the movement demand calculation unit 26, by selecting the distribution type by the input unit 31, a floor traffic demand generation rate which is a ratio of what ratio the building user of each floor uses the elevator for each time section can be obtained. The number of elevator users on each floor can be calculated from the floor traffic demand generation rate and the presence personnel on each floor. In addition, by inputting the inflow rate/outflow rate for each entrance, the number of inflow people and the number of outflow people at each entrance can be calculated from the number of elevator users on each floor. As a result, it is possible to calculate the distribution from each entrance to each entrance.

The transit demand calculation unit 27 creates transit demand data, which is the movement through a via-point, among movement demands in the building. Note that the via-point is, for example, a store or a toilet in the building. Both automatic and manual methods are provided for the transit method. For example, in the case of the automatic method, a method of obtaining the usage rate of the store or the toilet based on the actual measurement value of the similar building may be used. Furthermore, only the usage rate may be input by the input unit 31, and the number of people obtained by multiplying the usage rate by the number of people on the floor where each store or toilet is installed may be used as the number of transit people. In the manual method, the number of people passing through each store or toilet may be input from each floor.

The people flow control unit 28 generates people in a pseudo manner from each entrance based on the traffic demand in the building, transit information,and the layout of the building calculated as described above, and performs control while moving the user to a destination via the elevator or building facility in accordance with a control model of the people. In the present example, regarding a user having a special property, control is also performed. Here, in a case where the user having a special property is generated, when an area that can be accessed with the special property is set at the time of searching for a destination from the generated location, a route search is performed in consideration of the area in the movement route. In this state, the shortest route is searched in accordance with the usage status, and the user is controlled.

The interface unit 30 includes the input unit 31 and an output unit 32. Data such as the BIM model and data such as a use application of a building are input to the input unit 31.

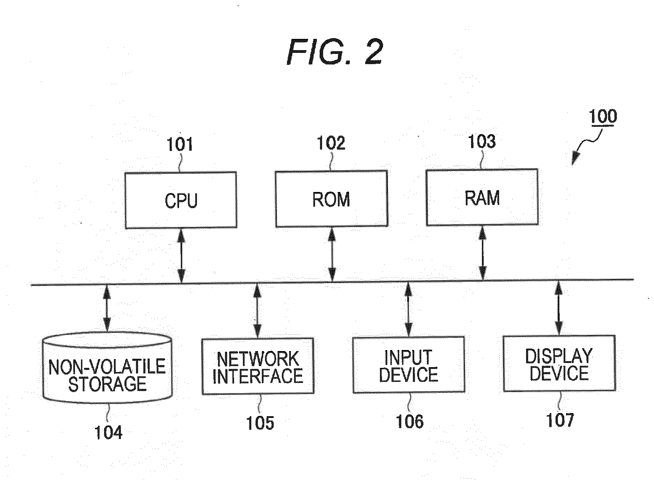

The output unit 32 outputs a result of simulation by the in-building traffic flow setting device 100. As an output form of the simulation result, for example, in addition to a form by display on a display device 107 (FIG. 2) installed in the in-building traffic flow setting device 100, there is a form in which data of the simulation result is output to another terminal.

The elevator simulator unit 40 includes the car simulation unit 41 and the operation simulation unit 42.

The car simulation unit 41 simulates the operation of each car of the elevator which is the elevator installed in the building indicated by the BIM model.

The operation simulation unit 42 simulates the operation of the entire elevator installed in the building indicated by the BIM model.

The car simulation unit 41 and the operation simulation unit 42 simulate the operation of the elevator based on the traffic flow simulated by the people flow simulator unit 20. As a result, it is possible to perform a simulation of the operation status of each car, the number of waiting people in the elevator hall of each floor, and the like.

### [Hardware Configuration Example of In-Building Traffic Flow Setting Device]

The in-building traffic flow setting device 100 can be configured by, for example, a computer illustrated in FIG. 2.

The in-building traffic flow setting device (computer) 100 illustrated in FIG. 2 includes a central processing unit (CPU) 101, a read only memory (ROM) 102, and a random access memory (RAM) 103 connected to a bus. The in-building traffic flow setting device (computer) 100 further includes a non-volatile storage 104, a network interface 105, an input device 106, and the display device 107.

The CPU 101 is an arithmetic processing unit that reads, from the ROM 102, program codes of software that implements the functions performed by the in-building traffic flow setting device 100 and executes the program codes.

Variables, parameters, and the like generated during arithmetic processing are temporarily written to the RAM 103.

As the input device 106, for example, a keyboard, a mouse, or the like is used. In the case of the in-building traffic flow setting device 100, an operator who simulates a traffic flow performs an input operation by using the input device 106.

The display device 107 is, for example, a liquid crystal display monitor, and a simulation result obtained by execution of the computer is displayed by the display device 107.

As the non-volatile storage 104, for example, a large-capacity information storage medium such as a hard disk drive (HDD) or a solid state drive (SSD) is used. In the non-volatile storage 104, a program for executing a processing function performed by the in-building traffic flow.setting device 100 is recorded. s

For example, a network interface card (NIC) or the like is used as the network interface 105. The network interface 105 transmits and receives various types of information to and from the outside via a local area network (LAN), a dedicated line, or the like.

Note that the in-building traffic flow setting device 100 is configured by the computer illustrated in FIG. 2 as an example, and may be configured by another arithmetic processing device other than the computer. For example, some or all of the functions performed by the in-building traffic flow setting device 100 may be implemented by hardware such as a field programmable gate array (FPGA) and an application specific integrated circuit (ASIC)).

### [Example of BIM Model and Position Attribute]

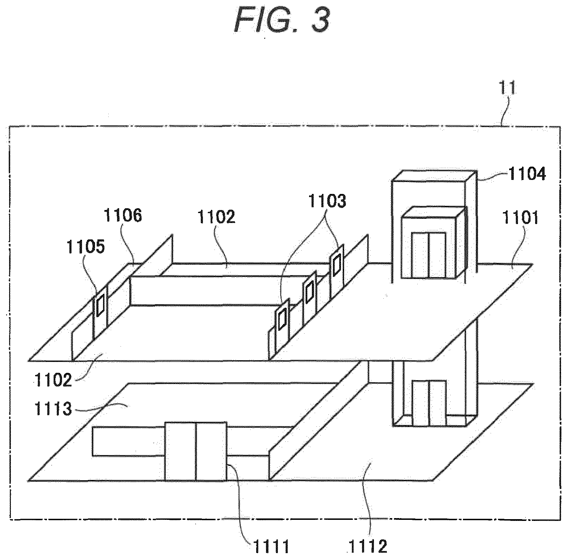

FIG. 3 illustrates an example (Example 1) of the BIM data (BIM model) stored in the BIM data storage unit 11 of the database unit 10.

The BIM model 11 illustrated in FIG. 3 illustrates a plurality of floors (a departure reference floor and a general floor) in the building. Here, it is assumed that the departure reference floor is the first floor, and the general floor is the second floor. When the third or higher general floor has the same shape as the second floor, the third or higher floor also has the same data as the BIM model 11 of the second floor.

As illustrated in FIG. 3, a building entrance 1111, a passage 1112, and a room 1113 are installed on the first floor. A passage 1101, rooms 1102 and 1106, and doors 1103 and 1105 are installed on the second floor. A door 1103 includes three doors and a door 1105 includes one door.

Further, an elevator 1104 as an elevator that moves up and down between the respective floors is installed. The elevator 1104 is installed at a place in contact with the passage 1112 on the first floor, and is installed at a place in contact with the passage 1101 on the second floor. Thus, a part of the passages 1101 and 1112 is used as an elevator hall.

In the building indicated by the BIM model illustrated in FIG. 3, the room 1106 on the second floor is a room where only workers permitted in advance can enter. Therefore, only the permitted person can pass through the door 1105 at the entrance of the room 1106. Here, the person permitted to pass is referred to as a property A.

The room 1102 on the second floor is a general work area where all workers can enter. Therefore, all workers can pass through the door 1103 at the entrance of the room 1102.

When the people who can pass in the building are classified as described above, the position attribute generation unit 22 of the people flow simulator unit 20 generates the position attribute for each part of the BIM model and sets the position attribute for each part.

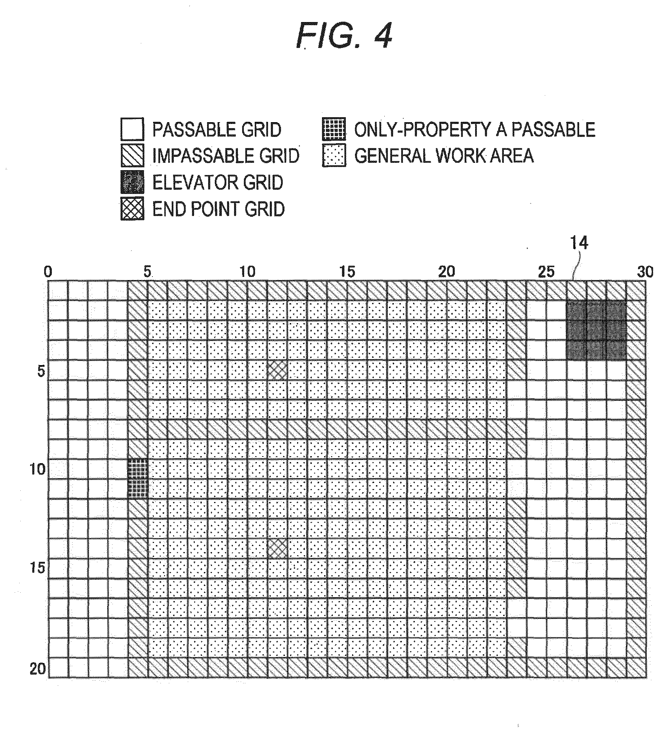

FIG. 4 illustrates an example in which a position attribute is set on the second floor of the BIM model illustrated in FIG. 3.

FIG. 4 is a plan view of the second floor, in which the second floor is divided by a grid having a predetermined area. In the example of FIG. 4, six types of grid, that is, a passable grid, an impassable grid, an elevator grid, an end point grid, a grid through which only the property A can pass, and a grid of a general work area are set as the position attributes of the respective grids.

Describing each grid, the passable grid is a place of the passage 1101 illustrated in FIG. 3. Further, the door 1105 at the entrance of the room 1106 is a door that allows only a person of the property A to pass through, and the room 1106 is also an area that allows only a person of the property A to pass through, and thus the door 1105 and the room 1106 are passable grids.

The impassable grid is a place corresponding to the wall of the building.

The elevator grid is a place where the elevator 1104 is installed.

The end point grid is a place serving as a terminal or a starting end when simulating a traffic flow.

The grid through which only the property A can pass is a place through which only the worker of the property A can pass.

The grid of the general work area is a place through which all workers can pass.

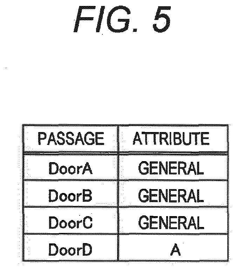

FIG. 5 illustrates details of respective position attributes of the doors 1103 and 1105 on the second floor. In FIG. 5, it is assumed that three doors constituting the door 1103 are Door A, Door B, and Door C, and the door 1105 is Door D.

As illustrated in FIG. 5, Door A, Door B, and Door C are "general" in which there is no traffic restriction as a position attribute, and Door D is "A" in which only the property A can pass as the position attribute.

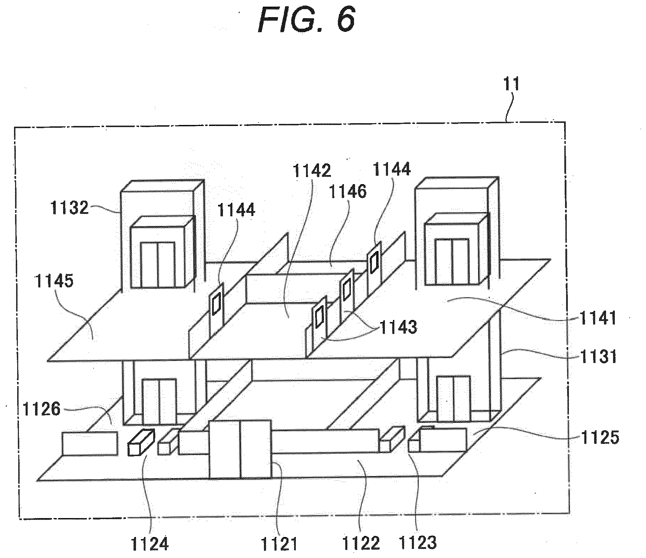

FIG. 6 illustrates another example (Example 2) of the BIM model stored in the BIM data storage unit 11 in the database unit 10.

The BIM model illustrated in FIG. 6 also illustrates the departure reference floor (first floor) and a floor (second floor) other than the departure reference floor in the building.

As illustrated in FIG. 6, a building entrance 1121, a passage 1122, gates 1123 and 1124, and passages (elevator halls) 1125 and 1126 are installed on the first floor.

Passages (elevator halls) 1141 and 1145, doors 1143 and 1144, and rooms 1142 and 1146 are installed on the second floor.

Further, elevators 1131 and 1132 as elevators that move up and down between the respective floors are installed.

In the building indicated by the BIM model illustrated in FIG. 6, only a worker who has been permitted in advance (person of property A) can pass through the gate 1124 on the first floor, and only the person of property A can use the elevator 1132. Only the person of the property A can use the passages 1126 and 1146 connected to the elevator 1132. In addition, only the person of property A can pass through the gate 1124 for entering and exiting the passage 1126 on the first floor.

The room 1146 on the second floor is a room where only the person of the property A can enter. Therefore, only the person of the property A can pass through the door 1144 at the entrance of the room 1146. Furthermore, only the person of the property A can pass through the door 1144 between the passage 1145 and the room 1142.

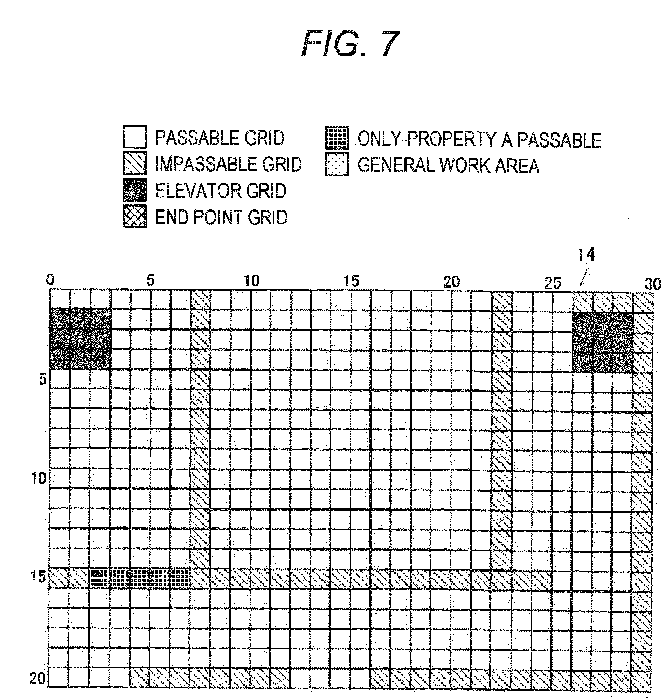

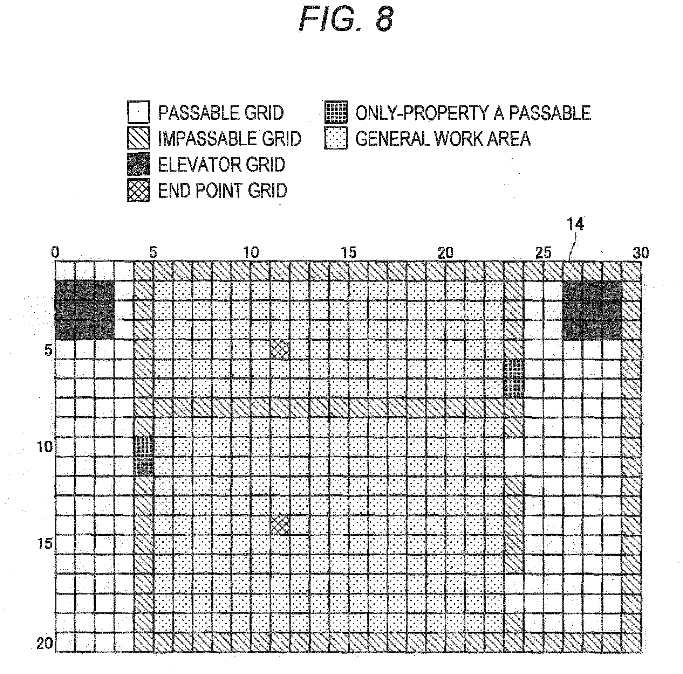

FIGS. 7 and 8 illustrate examples in which position attributes are set on the first floor (FIG. 7) and the second floor (FIG. 8) of the BIM model illustrated in FIG. 6. Also in the examples of FIGS. 7 and 8, six types of grid, that is, a passable grid, an impassable grid, an elevator grid, an end point grid, a grid through which only the property A can pass, and a grid of a general work area are set as the position attributes of the respective grids.

As illustrated in FIG. 7, the position attribute of the gate 1124 on the first floor is a passable grid for only the person of the property A.

As illustrated in FIG. 8, a place (two places) of the door 1144 on the second floor is a passable grid for only the person of the property A. It should be noted here that the area of the room 1146 cannot be accessed unless it passes through the door 1144 through which only the person of the property A can pass. In general, when traffic calculation or building installation planning is performed, the presence personnel is calculated from the number of users per unit area depending on the use of the building from the area of the building. However, in the case of the present example, it is possible to prepare a room under unique conditions such as higher security. Thus, it is possible to designate a room that can be used.only by the property A, for example, as another use and change the number of users per unit area. Alternatively, the number of people in the room may be manually designated.

In addition, in FIG. 7, there is a route that can be accessed only by the user of the property A. This is an area that passes through the gate 1124, passes through the room 1126 and the elevator 1132, passes through the room 1145, and uses the door 1144. In a case where the user having the property A determines that the room 1125 is congested and the waiting time is long when the simulation is started, the user may select a route passing through the gate 1124. A route search area of the user having the so-called property A is different from a route search area of the user not having the property A.

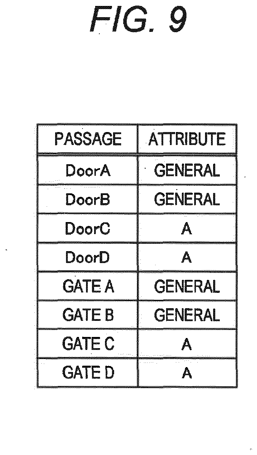

FIG. 9 illustrates details of the respective position attributes of the doors 1143 and 1144 on the second floor (four places in total) and the gates 1123 and 1124 on the first floor. In FIG. 6, it is assumed that two doors constituting the door 1143 are Door A and Door B, and two doors constituting the door 1144 are Door C and Door D. In addition, two gates are installed at the respective places of the gates 1123 and 1124 on the first floor, and a total of four gates are referred to as a gate A, a gate B, a gate C, and a gate D.

As illustrated in FIG. 9, Door A and Door B are "general" indicating a door with no traffic restriction as the position attribute, and Door C and Door D are "A" indicating a door through which only the property A can pass as the position attribute.

In addition, the gate A and the gate B are "general" indicating that there is no traffic restriction as the position attribute, and the gate C and the gate D are "A" indicating a gate through which only the property A can pass as the position attribute.

### [Example of Presence Personnel Database]

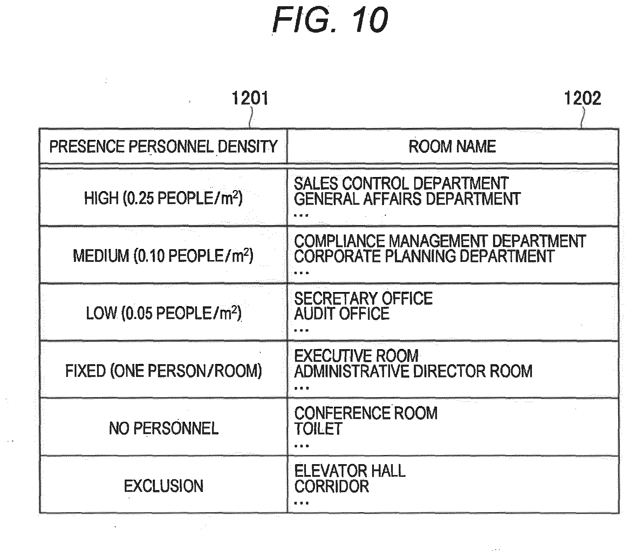

FIG. 10 illustrates a configuration example of the presence personnel database 12.

The presence personnel database 12 stores data in which the presence personnel density 1201 and the room name 1202 are associated with each other.

For example, "sales control department", "business department", and the like are assigned as rooms with a high presence personnel density in the building (here, 0.25 people/m²).

In addition, "compliance management department", "corporate planning department", and the like are assigned as rooms with medium presence personnel density in the building (here, 0.10 people/m²).

In addition, "secretary office", "auditor office", and the like are assigned as rooms with low presence personnel density in the building (here, 0.05 people/m²).

In addition, "executive room", "administrative director room", and the like are assigned as rooms with fixed presence personnel density in the building (here, one person/room).

In addition, "conference room", "toilet", and the like are assigned as rooms with no presence personnel.

Furthermore, "elevator hall", "corridor (passage)", and the like are assigned as places other than the target for calculating the presence personnel.

With reference to the data in which the presence personnel density 1201 and the room name 1202 illustrated in FIG. 10 are associated with each other, data of the room name 1202 of each room indicated by the BIM model is acquired, and the presence personnel is calculated based on the size (area) of each room and the presence personnel density and then stored in the presence personnel database 12.

### [Example of Movement Demand Distribution Database]

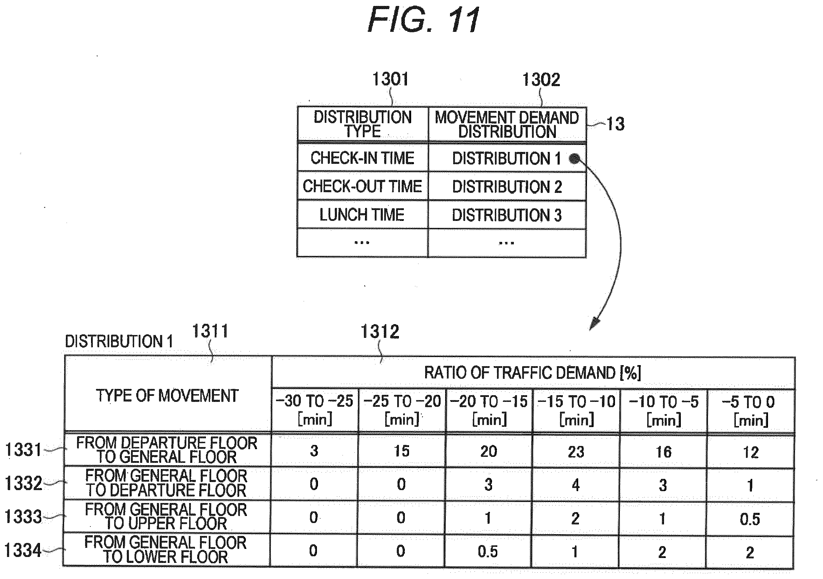

FIG. 11 illustrates a configuration example (Example 1) of the movement demand distribution database 13. The movement demand distribution database 13 indicates the movement demand of the elevator 1131 in the BIM model 11 illustrated in FIG. 6. As described above, the elevator 1131 is an elevator in which there is no restrictions on the users.

As the movement distribution, there are distribution types 1301 such as check-in, check-out, and lunch time, and values such as Distribution 1, Distribution 2, and Distribution 3 shown in the column of the movement demand distribution 1302 are set for each type.

For each of Distributions 1, 2, and 3, as illustrated on the lower side of FIG. 11, the detailed movement demand distribution is created and registered as the movement demand distribution database 13.

The movement demand distribution at the time of check-in (Distribution 1) illustrated on the lower side of FIG. 11 is divided into four types as the type of movement 1311: movement 1331 from the departure floor to the general floor, movement 1332 from the general floor to the departure floor, movement 1333 from the general floor to the upper floor, and movement 1334 from the general floor to the lower floor.

Then, for the movement for each category of the type of movement 1311, a ratio 1312 of the traffic demand for each time section is calculated.

The ratio 1312 of the traffic demand by the time section is divided into six time sections of "-30 minutes to -25 minutes", "-25 minutes to -20 minutes", "-20 minutes to -15 minutes", "-15 minutes to -10 minutes", "-00 minutes to -5 minutes", and "-5 minutes to 0 minutes". Here, 0 minutes are the event occurrence time such as the work start time and the work end time, and FIG. 11 illustrates a change in traffic demand from 30 minutes before the event occurrence time.

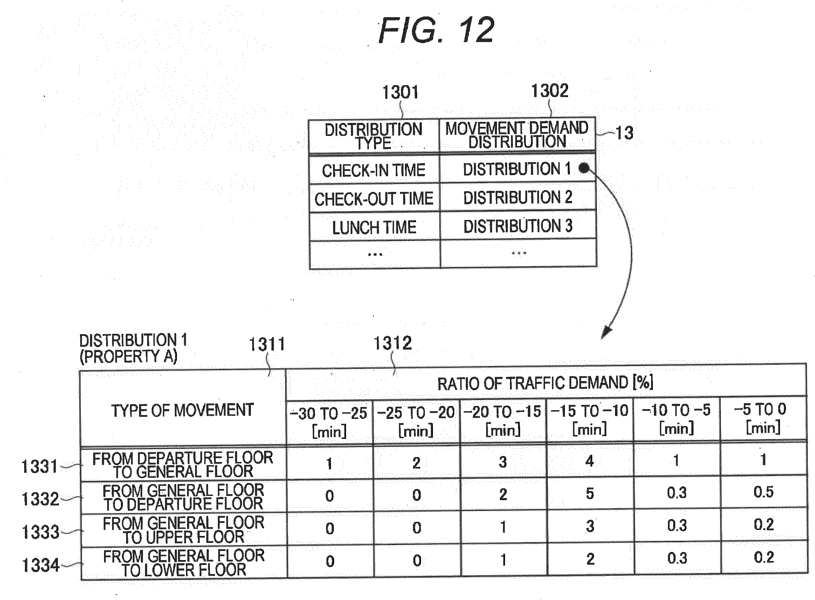

FIG. 12 illustrates a configuration example (Example 2) of the movement demand distribution database 13.

The example of FIG. 12 illustrates the movement demand of the elevator 1132 in the BIM model 11 illustrated in FIG. 6 in the movement demand distribution using the elevator in the building. As described above, the use of the elevator 1132 is limited only to the worker of the property A.

As illustrated on the lower side of FIG. 12, the detailed movement demand distribution of the elevator 1132 has the same data structure as the detailed movement demand distribution illustrated in FIG. 11. The value of the ratio 1312 of the traffic demand is a value significantly smaller than the traffic flow of the elevator 1131 illustrated in FIG. 11 since the value is the traffic flow of only the worker of the property A.

Note that, in the examples of FIGS. 11 and 12, the change in the traffic demand before the event occurrence time such as the work start time is illustrated, but in the case of the work end time, the change in the traffic demand for a predetermined time after the event occurrence time is assumed. In addition, regarding the lunch time, the change in traffic demand in a time section from the start to the end of the lunch time is preferable.

### [Calculation Example of Movement Demand Distribution]

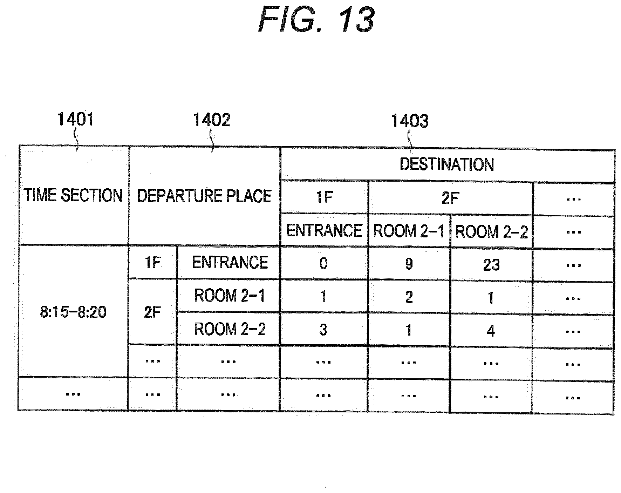

FIG. 13 illustrates an example in which the movement demand calculation unit 26 calculates specific movement demand data 15 for each time section in the building.

The movement demand data 15 indicates a movement demand between a departure place 1502 and a destination 1503 for each time section 1501. The numerical value of the movement demand illustrated in FIG. 13 is the number of users.

For example, the movement demand calculation unit 26 calculates each movement demand such that the movement demand from the entrance on the first floor to Room 2-1 on the second floor is 15 people, and the movement demand from the entrance on the first floor to Room 2-2 on the second floor is 30 people, during a period from 8:15 to 8:20. In the present example, there is a user having a special property of the property A. For example, in a case where the number of people working in the room 1146 and having the property A is designated as 100, the number of people moving from the entrance on the first floor to Room 2-1 on the second floor is calculated from the total ratio illustrated in FIG. 12. That is, when an area accessible by a user having a special property and a door or building facility having a special property are installed, and the number of people expected to access the room is determined, conditions for automatically generating a user having the property A are satisfied.

### [Calculation Example of Presence Personnel]

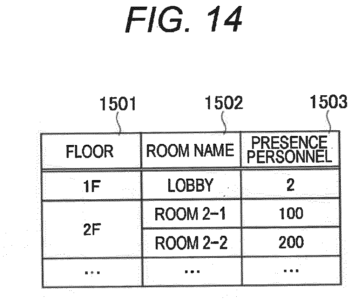

FIG. 14 illustrates an example in which the presence personnel calculation unit 23 calculates the presence personnel data 16 of each room in the building.

The presence personnel data 16 indicates a floor 1601, a room name'1602, and presence personnel 1603.

For example, in Room 2-1 on the second floor, the presence personnel is calculated as 100 people. The presence personnel is calculated from the size of each room indicated by the BIM model and the presence personnel density for each name illustrated in FIG. 10.

### [Example of Elevator Setting Data]

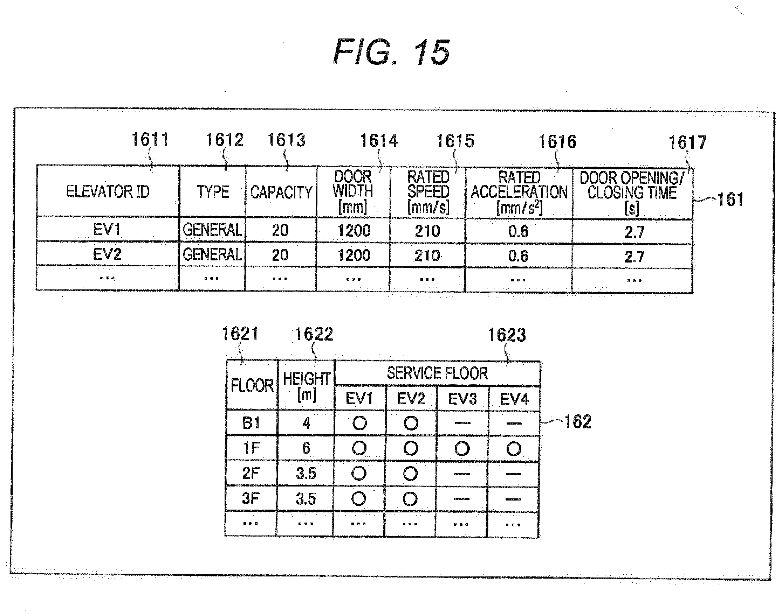

FIG. 15 illustrates an example of setting data 17 of each elevator installed in the building. The setting data 17 of each elevator is stored in the elevator simulator unit 40.

As illustrated on the upper side of FIG. 15, the elevator setting data 17 includes information of an elevator ID 1711, a type 1712, a capacity 1713 of a car, a door width 1714 of the car, the rated speed 1715 of the car, the rated acceleration 1716 of the car, and the door opening/closing time 1717 as all types of elevator data 171 installed in the building.

In addition, as illustrated on the lower side of FIG. 15, the setting data 17 of the elevator includes data of a floor 1721, a height 1722 of each floor 1721, and a service floor 1723 as service floor data 172.

The elevator simulator unit 40 simulates the operation state of the elevator of each car based on the setting data 17 of the elevator and the movement demand calculated by the movement demand calculation unit 26 of the people flow simulator unit 20.

### [Example of Transit Demand Generation-Rate Data]

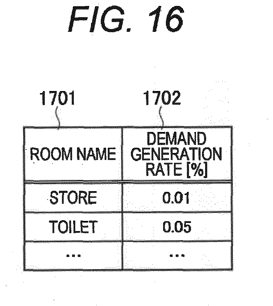

FIG. 16 shows an example of transit demand generation-rate data stored in the transit demand generation-rate data storage unit 18.

The transit demand generation-rate data stored in the transit demand generation-rate data storage unit 18 has data of a room name 1801 and a demand generation rate 1802.

For example, the transit demand generation rate for stores is 0.01%, and the transit demand generation rate for toilets is 0.05%.

Among the movement demands illustrated in FIG. 13, the movement demand at the ratio indicated by the transit demand generation rate is generated through a via-point such as the store or the toilet.

### [Example of Via-Point Stay Time Distribution Data]

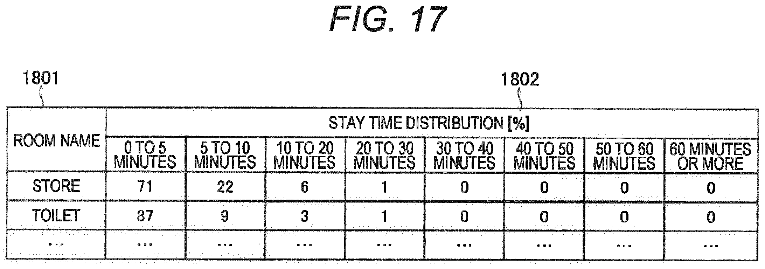

FIG. 17 illustrates an example of the via-point stay time data storage unit 19.

The via-point stay time data storage unit 19 has data of a room name 1901 of the via-point and a stay time distribution 1902.

For example, regarding the store, a stay time for 0 to 5 minutes is 71%, the stay time for 5 to 10 minutes is 22%, the stay time for 10 to 20 minutes is 6%, and the stay time for 20 to 30 minutes is 1%. In addition, regarding the toilet, the stay time for 0 to 5 minutes is 87%, the stay time for 5 to 10 minutes is 9%, the stay time for 10 to 20 minutes is 3%, and the stay time for 20 to 30 minutes is 1%.

The transit demand calculation unit 27 calculates a transit demand generated in a part of the movement demand by using the transit demand generation-rate data stored in the transit demand generation-rate data storage unit 18 illustrated in FIG. 16 and the via-point stay time distribution data stored in the via-point stay time distribution data storage unit 19 illustrated in FIG. 17.

### [Example of Elevator Transportation Capacity Depending on Building Use]

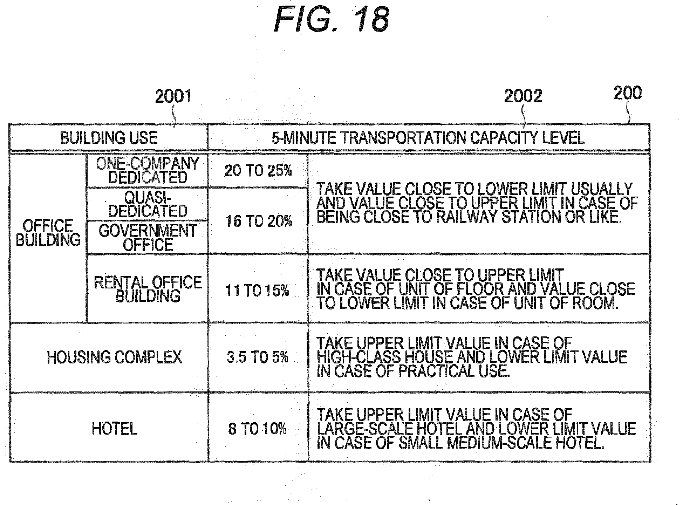

FIG. 18 illustrates an example of appropriate transportation capacity data 200 of the elevator that changes depending on the use of the building.

The transportation capacity data 200 indicates a building use 2001 and a 5-minute transportation capacity level 2002. The 5-minute transportation capacity level 2002 indicates a transportation situation that actually occurs with respect to the transportation capacity at which the elevator is fully operated. For example, when the transport capacity is 10% at the level 2002 for 5 minutes, it indicates that 10% of the number of people in the building use the elevator for 5 minutes.

In the case of a dedicated building that is an office building and is used by one company as the building use 2001, the 5-minute transportation capacity level 2002 is set to 20% to 25%.

In addition, in the case of a quasi-dedicated building that is an office building and has a large area used by one company as the building use 2001, the 5-minute transportation capacity level 2002 is set to 16% to 20%.

In addition, also in the case of a building that is an office building and is used in a government office as the building use 2001, the 5-minute transportation capacity level 2002 is set to 16% to 20%. Among the numerical values of the office building, a value close to the lower limit is usually set. In the case of a building in a place close to a railway station or the like, a value close to the upper limit is set.

In addition, in the case of an office building and a rental office building as the building use 2001, the 5-minute transportation capacity level 2002 is set to 11% to 15%. Among the numerical values, a value close to the upper limit is set when the building of the rental office is a building on a floor. A value close to the lower limit is set when the building is a room to be lent in units of rooms on one floor.

In addition, in the case of a housing complex as the building use 2001, the 5-minute transportation capacity level 2002 is set to 3.5% to 5%.

In addition, in the case of a hotel as the building use 2001, the 5-minute transportation capacity level 2002 is set to 8% to 10%.

In order to secure the service level of the elevator based on the use of the buildings, the elevator simulator unit 40 simulates the operation status of the elevator by changing the size and speed of each car of the elevator, the number of cars, and the like.

### [Traffic Flow Calculation Processing in In-Building Traffic Flow Setting Device]

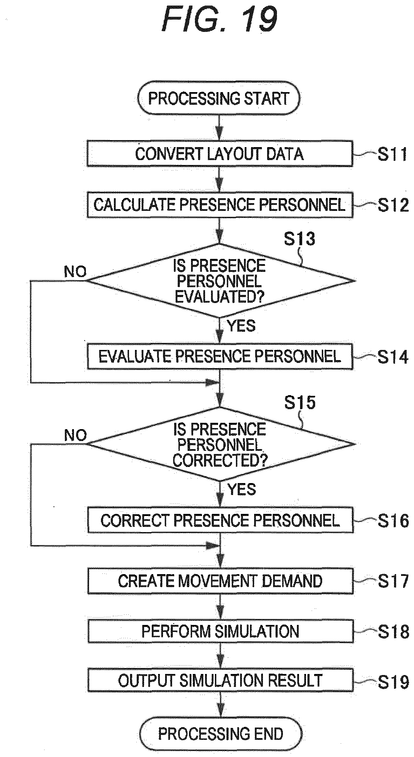

FIG. 19 is a flowchart illustrating an example of people flow estimation processing performed by the in-building traffic flow setting device in the present example.

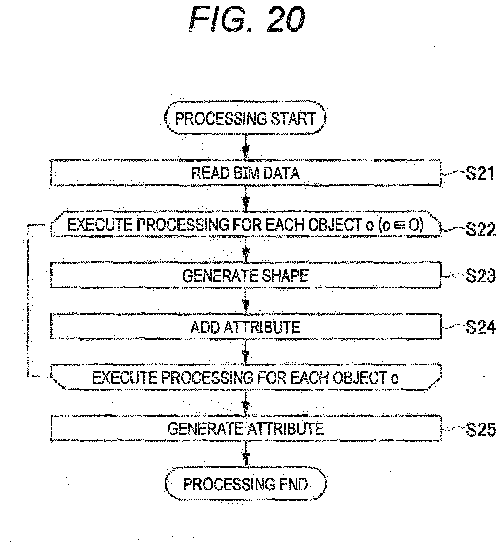

In the processing step S11, the BIM data is input to the layout data conversion unit 21 to calculate layout data. An example of processing of the layout data conversion unit 21 will be described later with reference to the flowchart in FIG. 20.

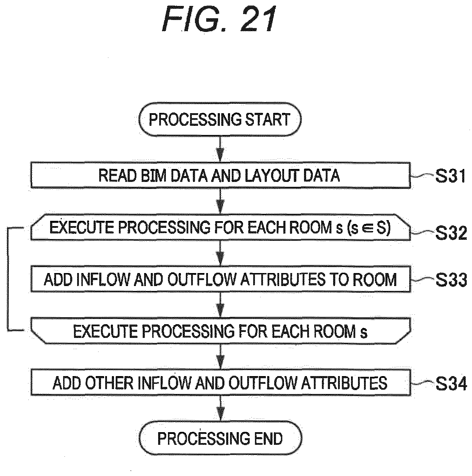

In the processing step S12, the layout data and the data of the presence personnel database 12 are input, and the presence personnel data is calculated by using the presence personnel calculation unit 23. An example of processing of the presence personnel calculation unit 23 will be described later with referenceto the flowchart of FIG. 21.

In the processing step S13, it is determined whether or not to evaluate the appropriateness of the presence personnel data calculated in the processing step S12. For example, the people flow simulator unit 20 determines whether or not to include the presence personnel evaluation unit 24. Furthermore, a determination flag variable that can be operated by the user with the input unit 31 can be stored in the database unit 10, and determination can be made by using the flag variable. Note that the determination is not limited thereto. When the determination is true (YES in S13), the process proceeds to the processing step S14. When the determination is false (NO in S13), the process proceeds to the processing step S15.

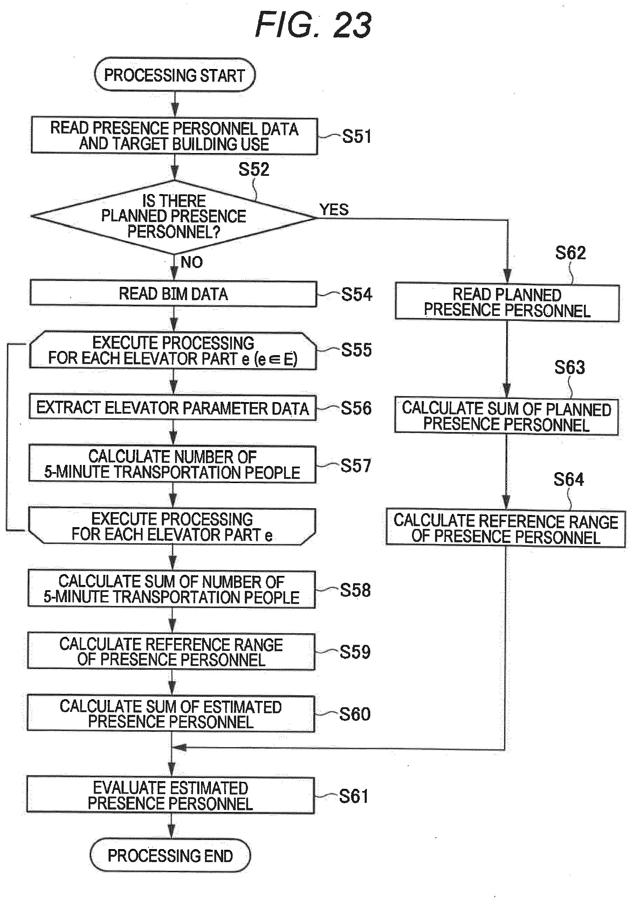

In the processing step S14, the presence personnel data calculated in the processing step S12 is input, and the appropriateness of the presence personnel data is determined by using the presence personnel evaluation unit 24. An example of processing of the presence personnel evaluation unit 24 will be described later with reference to the flowchart of FIG. 23.

In the processing step S15, it is determined whether or not to correct the presence personnel data 16 calculated in the processing step S12. For example, when it is evaluated in the processing step S14 that the presence personnel data is not appropriate, it is determined to perform the correction. Furthermore, a determination flag variable that can be operated by the user with the input unit 31 can be stored in the database unit 10, and determination can be made by using the flag variable. Note that the determination is not limited thereto. When the determination is true (YES in S16), the process proceeds to the processing step S16. When the determination is false (NO in S16), the process proceeds to the processing step S17.

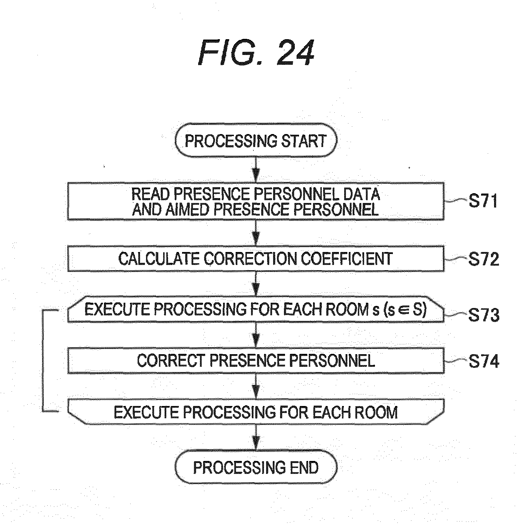

In the processing step S16, the presence personnel data calculated in the processing step S12 is input, and the presence personnel data is corrected by using the presence personnel correction unit 25. An example of processing of the presence personnel correction unit 25 will be described later with reference to the flowchart of FIG. 24.

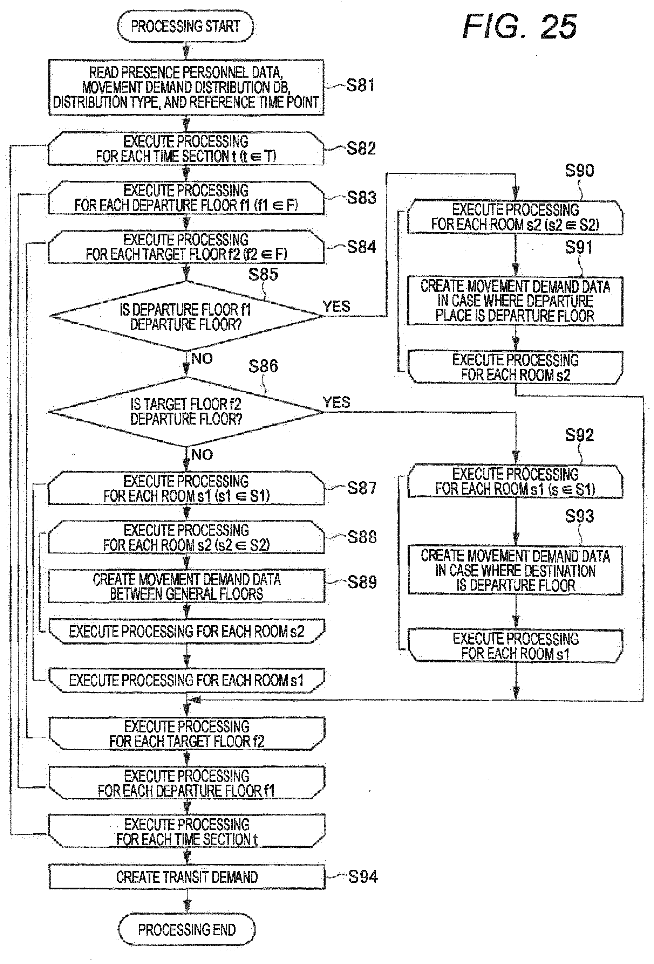

In the processing step S17, the presence personnel data, the data of the movement demand distribution database 13, the distribution type, and the reference time point are input, and the movement demand data is calculated by using the movement demand calculation unit 26. For example, the user inputs the distribution type and the reference time point with the input unit 31 and causes the database unit 10 to store the distribution type and the reference time point. An example of processing of the movement demand calculation unit 26 will be described later with reference to the flowchart of FIG. 25.

In the processing step S18, layout data, movement demand data, and elevator setting data are input, a simulation is performed by using the elevator simulator unit 40 to simulate the movement of the pedestrian and the operation of the elevator and to calculate the congestion status of the pedestrian and the position of the car of the elevator.

In the processing step S19, the output result (estimation result) of the elevator simulator unit 40 is displayed on the display device such as a liquid crystal display, by using the output unit 32 as a 3D model (image) obtained by simulating the movement of the pedestrian and the operation of the elevator. In addition, evaluation indexes related to congestion such as the number of people passing and the number of people staying in a specific area, the number of waiting people and the waiting time of the elevator, that is, simulation results are output.

As described above, the people flow estimation processing is realized by the processing steps S11 to S19.

Next, processing of each functional unit of the people flow simulator unit 20 will be described.

FIG. 20 is a flowchart illustrating an example of processing of the layout data conversion unit 21.

In the processing step S21, BIM data is read.

In the processing step S22, a set of objects including shape data included in the BIM data is set as O, and processing from the processing step S23 to the processing step S24 is repeated for each object (alternatively, an object group that is a set of a plurality of objects constituting a BIM part) o (o ∈ O).

In the processing step S23, a component that have the same shape and perform the same function as the object o is disposed (shape is generated) at the same position of the layout data to be output, based on the shape data of the object o. For example, when the layout data having a unit grid as the component is used, a passable grid of the layout data is disposed at a position corresponding to a floor object of the BIM data. In addition, an impassable grid of the layout data is disposed at a position corresponding to a wall object of the BIM data. An elevator grid of the layout data is disposed at a position corresponding to the object group of an elevator part of the BIM data.

In the processing step S24, when the component corresponding to the layout data includes the corresponding attribute among the attributes of the object o, the corresponding attribute (setting value) is added (duplicated) to the component. For example, information such as the door width and the rated speed is added (duplicated) to the elevator grid from the elevator part as the attribute. Note that this attribute is not necessarily added (duplicated) from the object o to the component. For example, in the layout data, information such as the door width and the rated speed of the elevator is stored not as an elevator grid which is a component of the layout data but as elevator setting data. Each elevator grid may store only a pointer of the corresponding elevator setting data. In this case, the elevator setting data corresponding to the information of the object o is created, and the corresponding elevator grid stores a pointer of the elevator setting data.

In the processing step S25, the BIM data and the layout data are input, and the position attribute related to (associated with) an inflow and outflow point corresponding to the departure place or the destination of the movement is added to the layout data by using the position attribute generation unit 22 (generates the inflow and outflow attribute). An example of processing of the position attribute generation unit 22 will be described later with reference to the flowchart of FIG. 21.

As described above, the processing of the layout data conversion unit 21 is realized by the processing steps S21 to S25. As a result, it is possible to convert the BIM data into layout data as an input of the elevator simulator unit 40.

FIG. 21 is a flowchart illustrating an example of processing of the position attribute generation unit 22.

In the processing step S31, BIM data and layout data are read.

In the processing step S32, a set of room objects included in the BIM data is set as S, and the process of the next processing step S33 is repeated for each room object (room) s (s E S).

In the processing step S33, the position attribute (the inflow and outflow attribute to the room) related to the inflow and outflow point (the room object is specified) is added to the position of the layout data corresponding to the inside or the entrance of the room object s of the layout data (BIM data). For example, a passable grid at a position corresponding to the center, the center of gravity, or the entrance inside the room object s is changed to an end point grid. In addition, the position attribute created in each room stores an ID including a numerical value or a character string that can be identified as the room. For example, when the position attribute is added to a position corresponding to the center of a room having a room name "Room 1" an end point grid is created as a position attribute regarding an inflow and outflow point having "Room 1" as an ID. When there are a plurality of rooms having the same room name, a floor number to which the room belongs, an object ID of an object, and the like are added, and the position attribute of a unique ID is created for each room name.

In the processing step S34, a position attribute (other inflow and outflow attributes) related to an inflow and outflow point installed other than the room object s is added. For example, an ID including a numerical value or a character string that can be identified as an entrance of a building is similarly stored for the entrance of the building, and an end point grid is set. In addition, when the BIM data includes not only the building but also shape data around the building, an end point grid may be set around the building instead of the entrance of the building. For example, when there are entrances of a railway station, a bus stop, and the like around a building, an end point grid may be set there. Thus, it is possible to estimate the flow of people from the periphery of the building to the entrance of the building.

As described above, the processing of the position attribute generation unit 22 is realized by the processing steps S31 to S34. As a result, it is possible to specify the positions of a movement source and a movement destination and perform association with the movement demand data 15.

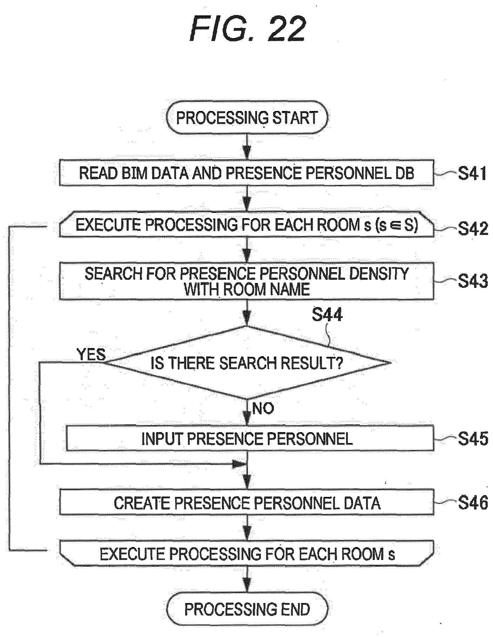

FIG. 22 is a flowchart illustrating an example of processing of the presence personnel calculation unit 23.

In the processing step S41, the presence personnel calculation unit 23 reads BIM data (layout data) and data in the presence personnel database 12.

In the processing step S42, the presence personnel calculation unit 23 sets a set of room objects included in the BIM data as S, and repeats the processing from the processing steps S43 to S46 for each room object s (s E S) .

In the processing step S43, the presence personnel calculation unit 23 searches the presence personnel density from the presence personnel database 12 by using the room name of the room object s as a search key. When there is a search result, the presence personnel calculation unit 23 outputs the presence personnel density. When there is no search result, the presence personnel calculation unit 23 outputs a value indicating that there is no search result. For example, an integer "-1", NULL, an empty object, or the like is output.

In the processing step S44, the processing is branched according to the output result of the processing step S43. In a case where there is a search result in the processing step S43 and the presence personnel density 1201 is output (YES in S44), the process proceeds to the processing step S45. When, the value indicating that there is no search result and there is no search result is output in the processing step S43 (NO in S44), the process proceeds to the processing step S46.

In the processing step S45, the presence personnel density of the room object s is calculated by multiplying the presence personnel density or the input presence personnel density searched in the processing step S45 by the area of the room object s, and thus the presence personnel data is created. Note that, when the presence personnel density is not set per area but is set per room, the presence personnel per room is used as the presence personnel as it is to create the presence personnel data. In addition, when not the presence personnel density is input, but the presence personnel is input, the presence personnel data is created by using the input presence personnel.

In the processing step S46, for example, the user inputs the presence personnel density with the input unit 31. Note that, when the user inputs the presence personnel density, an initial value of the presence personnel density may be input in advance. As the initial value, for example, the presence personnel density acquired by using, as a search key, a room name having high similarity with a room name of a certain room. In addition, some presence personnel densities may be displayed as reference values and selected by the user. In addition, the user may input the presence personnel instead of the presence personnel density. In addition, the input presence personnel density may be added to the presence personnel database 12 in association with a room name of a certain room. As a result, the presence personnel database 12 is expanded.

As described above, the processing of the presence personnel calculation unit 23 is realized by the processing steps S41 to S46. As a result, it is possible to calculate the presence personnel density of the room object included in the BIM data.

FIG. 23 is a flowchart illustrating an example of processing of the presence personnel evaluation unit 24.

In the processing step S51, presence personnel data is read. In addition, the target building use corresponding to one of the building uses (use 2001 illustrated in FIG. 18) of the service level of the elevator is read. The target building use is a building use corresponding to a target building among the building uses. For example, the target building use is input in advance by the user with the input unit 31 and stored in the database unit 10. In addition, a database in which the name of the building is associated with the target building use may be created, and the target building use may be searched and determined by using the database with the name of the building as a search key.

In the processing step S52, it is determined whether or not there is the planned presence personnel used at the time of designing the building and data of the presence personnel corresponding thereto. When there are no planned presence personnel (NO in S52), the process proceeds to the processing step S54. When there is the planned presence personnel (YES in S52), the process proceeds to the processing step S62.

In the processing step S54, the BIM data is read.

In the processing step S55, a set of elevator parts included in the BIM data is set as E, and the processing from the processing step S55 to the processing step S57 is repeated for each elevator part e (e E E).

In the processing step S56, the elevator setting data (elevator parameter) is extracted from the elevator part or the BIM data. When the value corresponding to the elevator parameter is stored in the elevator part or the BIM data, the elevator part or the BIM data is used as the elevator parameter as it is. When the parameter related to the elevator specification data is not stored in the elevator part or the BIM data, and when the model number of the elevator is stored in the elevator part or the BIM data, each parameter is acquired from the specification of the elevator by using the model number.

On the other hand, when the model number of the elevator is not stored, the product specification of the elevator close to the shape and size of the elevator part is used as the parameter. In addition, a standard parameter determined in advance may be used. The service floor data uses the floor and the floor height stored in the BIM data as the floor and the floor height as they are. When the floor height is not stored in the BIM data, the floor height is calculated from the difference in the height information of each floor. The service floor is determined based on whether or not the door is set for each floor (or a height corresponding to each floor) in the elevator part or the BIM data. Note that the method of extracting the elevator parameter is not limited thereto.

In the processing step S57, the number of people to be transported for 5 minutes is calculated by using the rated speed, the rated acceleration, the capacity, the floor height, and the service floor illustrated in FIG. 15. The number of people to be transported for 5 minutes is calculated by multiplying the capacity of the elevator by the number of times that the elevator can go around in 5 minutes, which can be calculated by using one round time that is a time required to take a passenger on the departure floor, serve the upper floor, and return again to the departure floor after the elevator arrives at the departure floor. For example, the one round time is calculated as the sum of the dwell time calculated on the assumption that passengers of the capacity get on at the departure floor and get off at the service floor in accordance with the ratio of the presence personnel of each floor, the moving time of the elevator between the floors which can be calculated by using the floor height, the rated speed, and the rated acceleration, and the door opening/closing'time.

In the processing step S58, the sum of the number of people to be transported for 5 minutes, which is obtained for each elevator part, is calculated as the number of people to be transported for 5 minutes in the entire building.

In the processing step S59, the upper limit, the lower limit, and the like of the 5-minute transportation capacity level of the service level of the elevator are input as reference values of the transportation capacity for 5 minutes, and the upper limit and the lower limit of the presence personnel are calculated as reference ranges (allowable range of in-building personnel) by dividing the reference value of the transportation capacity for 5 minutes and the number of people to be transported for 5 minutes in the entire building. Note that the reference range of the presence personnel may be calculated by multiplying a specific presence personnel by a predetermined allowable ratio of upward deflection and downward deflection (allowable ratio) to calculate the upper limit and the lower limit of the reference range of the presence personnel. The specific presence personnel use a value obtained by multiplying the number of people to be transported for 5 minutes in the entire building by a specific value (for example, median) between the upper limit and the lower limit of the 5-minute transportation capacity level. The allowable ratio between the upper deflection and the lower deflection (allowable ratio) is input in advance by the user with the input unit 31, for example, and is stored in the database unit 10.

In the processing step S60, the sum of the presence personnel in the presence personnel data is calculated as the estimated presence personnel in the entire building. At this time, the passenger who uses the elevator considers that the floor is the second floor or more away from the lobby floor, and calculates the sum by excluding the presence personnel data of the lobby floor and the floor in contact with the lobby floor. However, the floor to be excluded may be changed depending on the building. For example, in a building having no equipment (facility) that can be used to move between floors other than the elevator, the presence personnel data of the lobby floor and the floor in contact with the lobby floor is not excluded.

In the processing step S62, the planned presence personnel is read.

In the processing step S63, when the planned presence staff is set for each floor, the sum of the planned presence personnel is calculated as the planned presence personnel of the entire building. At this time, the passenger who uses the elevator considers that the floor is the second floor or more away from the lobby floor, and calculates the sum by excluding the planned presence personnel of the lobby floor and the floor in contact with the lobby floor. However, the floor to be excluded may be changed depending on the building. For example, in a building having no equipment (facility) that can be used to move between floors other than the elevator, the planned presence personnel of the lobby floor and the floor in contact with the lobby floor is not excluded.

In the processing step S64, the upper limit and the lower limit of the reference range of the presence personnel may be calculated as the reference range (allowable presence personnel range) by multiplying the planned presence personnel by a predetermined allowable ratio of upward deflection and downward deflection (allowable ratio). The allowable ratio between the upper deflection and the lower deflection (allowable ratio) is input in advance by the user with the input unit 31, for example, and is stored in the database unit 10.

In the processing step S61, it is determined whether or not the estimated presence personnel calculated in the processing step S60 falls within the reference range (range between the lower limit and the upper limit of the reference value) of the presence personnel calculated in the processing step S59 or the processing step S64. When the estimated presence personnel is within the reference range, it is determined that the estimated presence personnel is appropriate. When the estimated presence personnel is not within the reference range, it is determined that the estimated presence personnel is not appropriate.

As described above, the processing of the presence personnel evaluation unit 24 is realized by the processing steps S51 to S64. As a result, it is possible to determine whether or not the presence personnel is appropriately set.

FIG. 24 is a flowchart illustrating an example of processing of the presence personnel correction unit 25.

In the processing step S71, the presence personnel data 16 and the target presence personnel as a reference of correction are read. For example, a specific value (median value or the like) in a range between the lower limit and the upper limit of the reference value of the planned presence personnel or the presence personnel calculated by the presence personnel evaluation unit 24 is used as the target presence personnel.

In the processing step S72, a ratio of the target presence personnel (second presence personnel) to the sum of the presence personnel (first presence staff) in the presence staff data is calculated as a correction coefficient. At this time, the passenger who uses the elevator considers that the floor is the second floor or more away from the lobby floor, and calculates the sum by excluding the planned presence personnel of the lobby floor and the floor in contact with the lobby floor. However, the floor to be excluded may be changed depending on the building. For example, in a building having no equipment (facility) that can be used to move between floors other than the elevator, the presence personnel of the lobby floor and the floor in contact with the lobby floor is not excluded.

In the processing step S73, a set of room objects included in the presence personnel data 16 is set as S, and the processing of the processing step S74 is repeated for each room object s (s ∈ S).

In the processing step S74, the presence personnel of the room object s (the presence personnel of the room name calculated by the presence personnel calculation unit 23) is multiplied by the correction coefficient to correct the presence personnel.

As described above, the processing of the presence personnel correction unit 25 is realized by the processing steps S71 to S74. As a result, it is possible to correct the presence personnel in each room so that the sum of the presence personnel falls within the reference range.

FIG. 25 is a flowchart illustrating an example of processing of the movement demand calculation unit 26.

In the processing step S81, the presence personnel data, the data of the movement demand distribution database 13, the distribution type, and the reference time point are read. As the distribution type and the reference time point, the distribution type and the reference time corresponding to the movement demand to be created are input. For example, the user inputs the distribution type and the reference time point with the input unit 31 and causes the database unit 10 to store the distribution type and the reference time point.

In the processing step S82, a set of time sections of the relative time included in the ratio of the traffic demand in the movement demand distribution database 13 is set as T, and the processing from the processing steps S83 to S89 is repeated for each time section t (t ∈ T).

In the processing step S83, a set of floors included in the presence personnel data 16 (or the BIM data 11) is set as F, and the processing from the processing steps S84 to S89 is repeated for each departure floor f1 (f1 ∈ F).

In the processing step S84, a set of floors included in the presence personnel data (or the BIM data) is set as F, and the processing from the processing steps S85 to S89 is repeated for each destination floor f2 (f2 ∈ F).

In the processing step S85, it is determined whether or not the departure floor f1 is the departure floor (lobby floor). When it is the departure floor (lobby floor) (YES in S85), the process proceeds to the processing step S90. When it is not the departure floor (lobby floor) (NO in S85), the process proceeds to the processing step S86.

In the processing step S86, it is determined whether or not the destination floor f2 is a departure floor (lobby floor). When the destination floor is the departure floor (lobby floor) (YES in S86), the process proceeds to the processing step S92. When the destination floor is not the departure floor (lobby floor) (NO in S86), the process proceeds to the processing step S87.

In the processing step S87, a set of rooms included in the departure floor f1 is set as S1, and the processing from the processing steps S88 to S89 is repeated for each room s1 (s1 ∈ S1).

In the processing step S88, a set of rooms included in the destination floor f2 is set as S2, and the processing of the processing step S89 is repeated for each room s2 (s2 ∈ S2).

In the processing step S89, the movement demand of each of the rooms s1 to s2 is calculated in a time section t' of the absolute time calculated by adding a time section t and the reference time. The movement demand is calculated by multiplying the presence personnel in the room s1 by the ratio 1312 of the traffic demand specified in the row 1333 or 1334 and the column corresponding to the time section t in the movement demand distribution illustrated in FIG. 11 or 12 in the movement demand distribution database 13. When the presence personnel in the room s1 is not sufficiently large, the movement demand is calculated by stochastically allocating the presence personnel in the room s1 to each time section in accordance with the ratio 1312 of the traffic demand. Note that the calculated movement demand is stored as the movement demand to move from a position corresponding to the room s2 to a position corresponding to the room s2 in the time section t' in the movement demand data.

In the processing step S90, a set of rooms included in the destination floor f2 is set as S2, and the processing of the processing step S91 is repeated for each room s2 (s2 E S2).

In the processing step S91, in the time section t' of the absolute time calculated by adding the time section t and the reference time, the movement demand with the room s2 of the destination floor f2 as a destination is calculated with the departure floor (lobby floor) as a departure place. The movement demand is calculated by multiplying the presence personnel in the room s2 by the ratio 1312 of the traffic demand specified by the row as illustrated in FIG. 11 and the column corresponding to the time section t in the movement demand distribution of the movement demand distribution database 13. When the presence personnel in the room s2 is not sufficiently large, the movement demand is calculated by stochastically allocating the presence personnel in the room s2 to each time section in accordance with the ratio of the traffic demand. Note that the calculated movement demand is stored as the movement demand to move from a position, corresponding to the departure floor (lobby floor) to a position corresponding to the room s2 in the time section t' in the movement demand data.

In the processing step S92, a set of rooms included in the departure floor f1 is set as S1, and the processing of the processing step S93 is repeated for each room s1 (s1 ∈ S1). In the processing step S93, the movement demand with the room-si of the departure floor f1 as a departure place and the departure floor (lobby floor) as a destination is calculated in the time section t' of the absolute time calculated by adding the time section t and the reference time. The movement demand is calculated by multiplying the presence personnel in the room s1 by the ratio 1312 of the traffic demand specified in the row as illustrated in FIG. 11 and the column corresponding to the time section t in the movement demand distribution of the movement demand distribution database 13. When the presence personnel in the room s1 is not sufficiently large, the movement demand is calculated by stochastically allocating the presence personnel in the room s1 to each time section in accordance with the ratio 1312 of the traffic demand. Note that the calculated movement demand is stored as the movement demand to move from a position corresponding to the room s1 to a position corresponding to the departure floor (lobby floor) in the time section t' in the movement demand data 15.

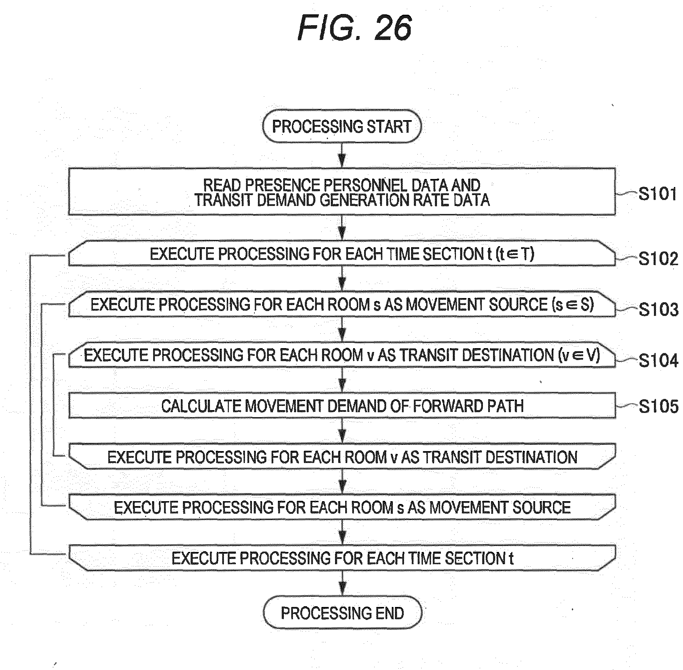

In the processing step S94, the transit demand calculation unit 27 calculates a movement demand to move to the via-point, and creates a transit demand. An example of processing of the transit demand calculation unit 27 will be described later with reference to the flowchart of FIG. 26.

As described above, the processing of the movement demand calculation unit 26 is realized by the processing steps S81 to S94. As a result, it is possible to calculate the movement demand data by using the presence personnel data.

FIG. 26 is a flowchart illustrating an example of the processing of the transit demand calculation unit 26.

In the processing step S101, the presence personnel data, the transit demand generation-rate data, and the via-point stay time distribution data are read.

In the processing step S102, a set of time sections obtained by dividing the simulation target time for each unit time defining the demand generation rate of the transit demand generation-rate data is set as T, and the processing from the processing steps S103 to S105 is repeated for each time section t (t ∈ T). Note that the division into the time section t. may be performed other than every unit time for defining the demand generation rate. For example, when the stay time distribution of the via-point stay time distribution data is represented by a relative frequency distribution obtained by dividing the stay time at equal intervals, the time section t may be set at the same interval as the interval of the relative frequency distribution.

In the processing step S103, a set of rooms specified by the room name in the presence personnel data is set as S, and the processing from the processing steps S104 to S105 is repeated for each room s (s 6 S) of the movement source.

In the processing step S104, a set of rooms specified by the room name of the transit demand generation-rate data is V, and the processing of the processing step S105 is repeated for each room v (v ∈ V) of the transit destination (via-point). Note that, when there is a plurality of rooms specified by the room name in the transit demand generation-rate data, for example, a room having the shortest distance to the room s of the movement source is used.

In the processing step S105, a movement demand from the movement source to the transit destination, that is, a movement demand on the forward path is calculated. The movement demand from the room s of the movement source to the room v of the transit destination in the time section t is calculated by multiplying the presence personnel specified in the room s of the source by the demand generation rate specified in the room v of the transit destination. The movement demand calculated is stored in the movement demand data as a movement demand from the room s to the room v in the time section t. The movement demand data to the via-point may be stored as data different from normal movement demand data, or may be stored in the same table.

As described above, the processing of the transit demand calculation unit 27 is realized by the processing steps S101 to S105. This makes it possible to calculate the movement demand data for reproducing the movement to a position as a via-point.

Note that the movement demand on the backward path for reproducing the movement from the room of the transit destination to the room of the movement source is generated, for example, by the people flow simulation unit 20 at a time point when a pedestrian agent generated by the transit movement demand arrives at a position as the via-point.

As described above, when the pedestrian agent arrives at the via-point, the people flow simulation unit 20 performs people flow simulation processing of creating movement demand data with a destination other than the via-point including the departure point of the pedestrian agent at a time point obtained by adding the stay time to the arrival time, based on the movement demand data calculated by the transit demand calculation unit 27.

Specifically, first, the stay time is probabilistically calculated by using the stay time distribution of the via-point stay time distribution data and a random number. Then, the movement demand to move to the room of the movement source is calculated in a time section after the stay time calculated from the time when the pedestrian agent arrives at the position of the via-point has elapsed. By calculating the movement demand of the backward path in this manner, it is possible to reproduce the movement to return to the room of the movement source.

As described above, the in-building traffic flow setting device 100 in the present example creates the position information that may be the movement source or the movement destination in the movement demand data, the layout data, and the layout data by using the BIM data as an input. Thus, it is possible to easily perform the people flow simulation processing regarding the flow of people (movement situation), the operation status of the elevator, and the usage status.

In addition, according to the in-building traffic flow setting device 100 in the present example, when the movement demand data is created, the presence personnel evaluation unit 24 can determine whether or not the presence personnel is appropriate. The user can easily determine whether or not the movement demand data is appropriate by referring to the evaluation result (determination result) of the presence personnel evaluation unit 24. In addition, when the evaluation result is not appropriate, the presence personnel correction unit 26 can perform correction.

### [Modification Examples]

The present invention is not limited to the above-described embodiment, and various modification examples may be provided.

Further, the above-described embodiment is described in detail in order to explain the present invention in an easy-to-understand manner, and the above embodiment is not necessarily limited to a case including all the described configurations. In the configuration diagram such as FIG. 1, control lines and information lines which are considered necessary for the descriptions, are illustrated, and not all the control lines and the information lines in the product are necessarily illustrated. In practice, it may be considered that almost all components are connected to each other. In addition, in the flowcharts illustrated in FIGS. 19 to 26, the execution order of some processing steps may be changed or some processing steps may be executed simultaneously within a range without an influence on the processing result of the embodiment.

Further, the configuration described in the above-described embodiment may be realized by software by the processor interpreting and executing a program for realizing the respective functions. Information such as a program, that realizes each function can be stored in a memory, a recording device such as a hard disk and a solid state drive (SSD), or a recording medium such as an IC card, an SD card, and an optical disk.

### Reference Signs List

- 10: database unit
- 11: BIM data storage unit
- 12: presence personnel database
- 13: movement demand distribution database
- 18: transit demand generation-rate data storage unit
- 19: via-point stay time distribution data storage unit
- 20: people flow simulator unit
- 21: layout data conversion unit
- 22: position attribute generation unit
- 23: presence personnel calculation unit
- 24: presence personnel evaluation unit
- 25: presence personnel correction unit
- 26: movement demand calculation unit
- 27: transit demand calculation unit
- 28: people flow control unit
- 30: interface circuit
- 31: input unit
- 32: output unit
- 40: elevator simulator unit
- 41: car simulation unit
- 42: operation simulation unit
- 100: in-building traffic flow setting device
- 101: CPU
- 102: ROM
- 103: RAM
- 104: non-volatile storage
- 105: network interface
- 106: input device
- 107: display device

## Claims

1. An in-building traffic flow setting device comprising:
a database unit that stores data of a BIM model of a building;
a people flow simulator unit that simulates a traffic flow in the building, which is indicated by the BIM model stored in the database unit; and
an elevator simulator unit that simulates an operation of an elevator installed in the building based on the traffic flow simulated by the people flow simulator unit,
wherein the people flow simulator unit includes
a position attribute generation unit that generates an attribute of a position on each floor indicated by the BIM model, and
a movement demand calculation unit that calculates a movement demand on each floor indicated by the BIM model in consideration of the attribute of each position generated by the position attribute generation unit.

2. The in-building traffic flow setting device according to claim 1, wherein the people flow simulator unit includes a presence personnel calculation unit that calculates presence personnel of each floor based on the BIM model and the attribute of each position generated by the position attribute generation unit.

3. The in-building traffic flow setting device according to claim 2, wherein the attribute of the position generated by the position attribute generation unit includes an attribute of a position where there is no restriction on stay at the position and an attribute of a position where only a specific person is allowed to stay.

4. The in-building traffic flow setting device according to claim 3, wherein the attribute of the position generated by the position attribute generation unit further includes an attribute of a position of a door or a gate where there is no restriction on a passage of the position and an attribute of a position of a door or a gate where only a specific person is allowed to pass.

5. The in-building traffic flow setting device according to claim 3, wherein, when an elevator is installed in the BIM model at a position having an attribute of a position where only a specific person is allowed to stay, the attribute being generated by the position attribute generation unit, the movement demand calculation unit calculates a movement demand using the elevator as a movement demand limited to the specific person.

6. The in-building traffic flow setting device according to claim 3, wherein
the attribute of the position generated by the position attribute generation unit further includes an attribute of a position where a presence personnel temporarily stops by, and
the people flow simulator unit includes a transit demand calculation unit that calculates a traffic flow through a temporary stop position based on an attribute of a temporary stop position of a presence personnel.

7. The in-building traffic flow setting device according to claim 6, wherein
the database unit includes a transit demand generation-rate data storage unit that indicates a probability of an occurrence of a traffic flow through a temporary stop position, and
the transit demand calculation unit calculates a traffic flow through a temporary stop position based on the probability stored in the transit demand generation-rate data storage unit.

8. The in-building traffic flow setting device according to claim 6, wherein
the database unit includes a via-point stay time distribution data storage unit that indicates a distribution of a stay time of a presence personnel at a temporary stop position, and
when calculating a traffic flow, the transit demand calculation unit refers to stay time distribution data of a via-point, which is stored in the via-point stay time distribution data storage unit.

9. The in-building traffic flow setting device according to claim 8, wherein the via-point stay time distribution data storage unit stores stay time distribution data created based on detection data of a sensor that is installed at a via-point and detects a person.

10. An in-building traffic flow setting method comprising:
a people flow simulation processing of simulating a traffic flow in a building indicated by a BIM model;
an elevator simulation processing of simulating an operation of an elevator installed in the building based on the traffic flow simulated in the people flow simulation processing;
a position attribute generation processing of generating an attribute of a position on each floor indicated by the BIM model; and
a movement demand calculation processing of calculating a movement demand on each floor indicated by the BIM model in consideration of the attribute of each position generated by the position attribute generation processing.
